# EUROPEAN PATENT APPLICATION

(11) **EP 4 660 920 A1**
(43) Date of publication of application: **10.12.2025**
(21) Application number: 24780361.2
(22) Date of filing: 26.03.2024
(51) Int. Cl.: G06Q 30/0283, G06Q 50/10

(54) **INFORMATION PROCESSING DEVICE, INFORMATION PROCESSING METHOD, AND PROGRAM**

(30) Priority: 27.03.2023 JP 2023049736
(71) Applicant: Morgenrot Inc., Tokyo 102-0083 (JP)
(72) Inventor: NISHIMOTO Masakazu, Tokyo 102-0083 (JP); NAKAMURA Masamichi, Tokyo 102-0083 (JP); ITO Hiroshi, Tokyo 102-0083 (JP); KOYAMA Saori, Tokyo 102-0083 (JP)
(74) Representative: Appleyard Lees IP LLP
(86) International application number: PCT/JP2024/012058
(87) International publication number: WO 2024/204253

(57) **Abstract**

The present invention improves convenience of provision, use, and management of a computational resource. A server 1 manages a buying and selling transaction of computational power between a computational power user U who uses computational power for executing a computation job and a computational power owner O who provides the computational power, and includes a price setting/order management unit 41. The price setting/order management unit 41 evaluates a predetermined value (for example, XX points or the like) for a computational power right, which is a right to use computational power of a predetermined unit defined by a plurality of indexes (for example, electricity, hardware, software, and data) provided from the computational power owner O.

## Description

### TECHNICAL FIELD

The present invention relates to an information processing device, an information processing method, and a program.

### BACKGROUND ART

Conventionally, there is a technique of managing, when jobs entered from a plurality of users are executed using a plurality of servers, limitation on the number of server computers assigned to each user or the like (see, for example, Patent Document 1).

### Citation List

### Patent Document

Patent Document 1: Japanese Unexamined Patent Application, Publication No. 2007-179100

### DISCLOSURE OF THE INVENTION

### Problems to be Solved by the Invention

A user is not always in a situation where a certain amount of jobs is to be constantly processed. For this reason, there is a method in which usage subscription to a server on a cloud service is made and the number of operable servers changes to reduce a cost. A provider of such a cloud service requires great care for ensuring and managing a proper computational resource.

The present invention has been made in view of such a situation, and is intended to improve convenience in provision, utilization, and management of a computational resource.

### Means for Solving the Problems

In order to accomplish the above-described object, an information processing system of one aspect of the present invention includes
computational power value evaluation means that evaluates a predetermined value of a right to utilize a predetermined unit of computational power defined by a plurality of indices provided from a computational power owner.

Each of an information processing method and a program of one aspect of the present invention is each of a method and a program corresponding to the information processing device of one aspect of the present invention above.

### Effects of the Invention

According to the present invention, the convenience in provision, utilization, and management of the computational resource can be improved.

### BRIEF DESCRIPTION OF THE DRAWINGS

Fig. 1 is a diagram showing the outline of a present service to which an information processing system including a server of one embodiment of an information processing device of the present invention is applied;
Fig. 2 is a diagram showing a configuration example of the information processing system for implementing the present service shown in Fig. 1;
Fig. 3 is a block diagram showing one example of a hardware configuration of the server of the information processing system of Fig. 2;
Fig. 4 is a functional block diagram showing a first embodiment of a functional configuration of the server having the hardware configuration of Fig. 3;
Fig. 5 is a diagram for describing the flow of computational power transaction processing in the server having the functional configuration of Fig. 3;
Fig. 6 is an arrow chart showing details of the flow of the computational power transaction of Fig. 5;
Fig. 7 is a diagram showing the configuration of a computational power token utilized for the present service shown in Fig. 1;
Fig. 8 is a diagram showing one example of a computational power token used with components of the computational power token of Fig. 7;
Fig. 9 is a diagram showing another example of the computational power token used with the components of the computational power token of Fig. 7;
Fig. 10 is a diagram for describing transition of the components of the computational power in the transaction of the computational power token separately for phases;
Fig. 11 is a functional block diagram showing a second embodiment of the functional configuration of the server having the hardware configuration of Fig. 3;
Fig. 12 is a diagram for describing the flow of computational power transaction processing in the server having the functional configuration of Fig. 11;
Fig. 13 is a diagram showing an example of a simple flow of the computational power transaction of the information processing system shown in Fig. 2;
Fig. 14 is a diagram showing an example of a computational power transaction in an insurance service in the information processing system shown in Fig. 2;
Fig. 15 is a view showing an example where a rating function of evaluating a computational resource provided by a computational power owner O is added; and
Fig. 16 is a diagram showing an example where an investor element is further added to the example of Fig. 15.

### PREFERRED MODE FOR CARRYING OUT THE INVENTION

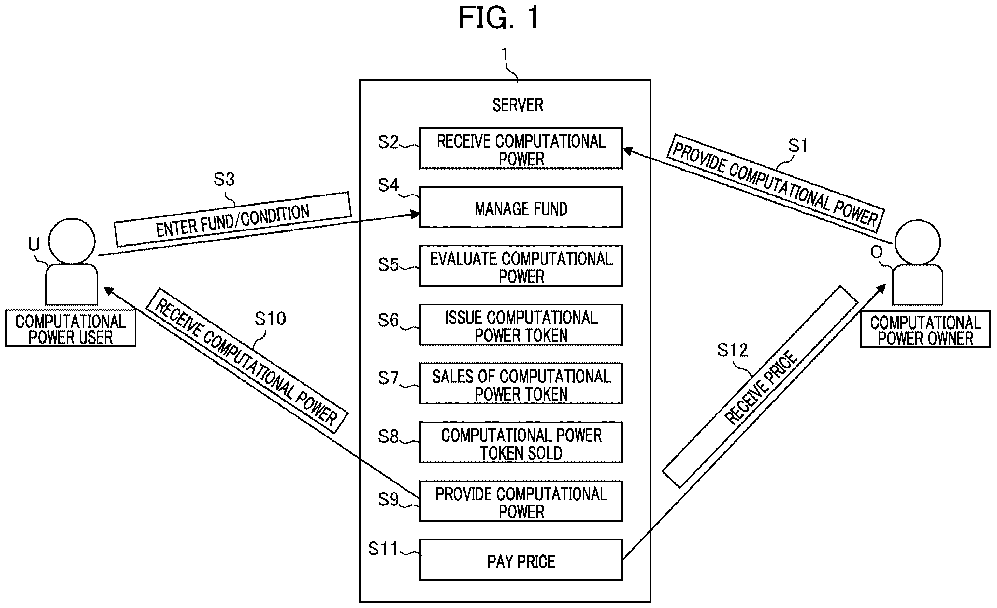

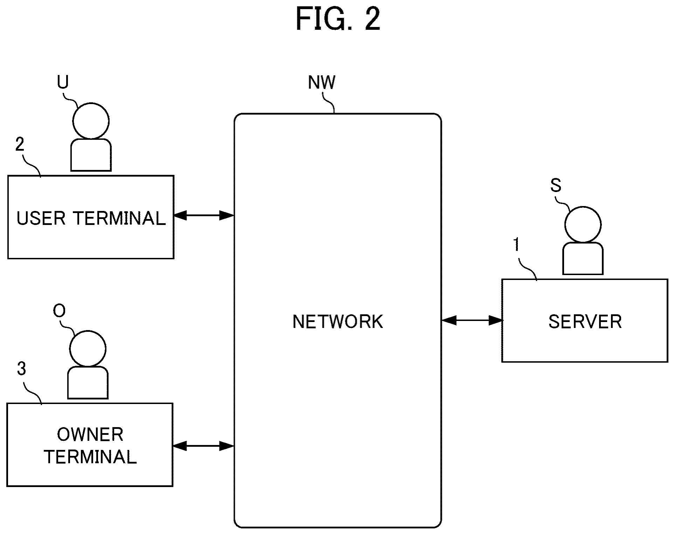

Hereinafter, embodiments of the present invention will be described with reference to the drawings. First, the outline of a service (hereinafter referred to as a "present service") which can be implemented by an information processing system (see Fig. 2 described later) to which a server according to one embodiment of the present invention is applied will be described with reference to Fig. 1.

Fig. 1 is a diagram showing the outline of a service (hereinafter referred to as a "present service") which can be implemented by an information processing system to which a server according to one embodiment of an information processing device of the present invention is applied.

As shown in Fig. 1, the present service is a service that mediates (matches) a sales transaction of a computational power between a computational power owner O who provides the computational power and a computational power user U who requires the computational power by a server 1 managed by a service provider S.

The server 1 receives the computational power provided from the computational power owner O, and provides the computational power to the computational power user U (receives the computational power from computational power user U's point of view). Moreover, the server 1 receives, from the computational power user U, a fund for obtaining the computational power desired by the computational power user U, and pays a price corresponding to the computational power transacted between the computational power user U and the computational power owner O to the computational power owner O.

Here, the computation indicates an industrially or academically valuable arithmetic operation, and for example, includes machine learning or inference, simulation, statistical processing, visualization processing, or the like. The computational power indicates an element essential or desirably used for executing the computation, such as an item or information. Specifically, the element forming the computational power includes, for example, a part or a combination of electricity, hardware (HW), software (SW), data, and the like. Note that details of components of the computational power will be described later.

The computational power owner O is a person who owns at least part of the computational power. An individual computational power owner O may own all the components of the computational power enough for implementing one computation, or may own some of the components of the computational power so that one computation can be implemented by integrating computational powers owned by a plurality of computational power owners O.

The computational power user U may perform the computation by receiving components of computational powers provided by a plurality of computational power owners O, or may perform the computation by receiving a computational power provided by an individual computational power owner O. Alternatively, the computational power user U may obtain part of the computational power from the computational power owner O, and may perform the computation by integrating such a computational power with part of the computational power owned by the computational power user U oneself.

Hereinafter, the flow of the service will be specifically described with reference to Fig. 1. In Step S1, the computational power owner O provides information on the computational power to the server 1. In Step S2, the server 1 receives the information on the computational power provided from the computational power owner O. In Step S3, the computational power user U enters a fund and a condition for obtaining the computational power into the server 1. In Step S4, the server 1 manages the fund entered from the computational power user U.

Here, in Step S5, the server 1 evaluates the value of the computational power provided from the computational power owner O as a predetermined value, such as a point, for a right to utilize a predetermined unit of computational power defined by a plurality of indices (for example, electricity, hardware, software, data). In Step S6, according to the evaluated value, the server 1 issues, to the computational power owner O, a computational power token for the computational power owner O to enforce one's right.

In Step S7, the server 1 performs the sales transaction of the computational power. Specifically, the server 1 executes control of listing for sale the computational power token provided from the computational power owner O and allowing a computational power user U satisfying a predetermined bidding condition among a plurality of computational power users U to make a successful bid for such a computational power token. At the time of the sales of the computational power, the server 1 selects the computational power token that satisfies the condition entered by the computational power user U, and recommends such a computational power token to the computational power user U. At the time of the sales transaction, in a case where it is possible to make a successful bid for a plurality of computational power tokens (with the same specifications) which are the same as each other at least in some indices, the server 1 executes control of causing the computational power user U to make a successful bid for (receive) a predetermined unit of computational power with priority given to a computational power token (for example, a computational power token of a computational power owner O who has registered a resource first) with a high predetermined priority defined in advance.

In Step S8, when the computational power matching the condition provided by the computational power user U is sold, the server 1 evaluates the value of the sold computational power token based on the bidding condition. This evaluation can be an index for value evaluation when a computational power with the same contents is provided next time. Moreover, the server 1 executes control of causing the computational power owner O to transfer a computational power equivalent to such a computational power token to the computational power user U. The server 1 executes control of causing the computational power user U to which a predetermined unit of computational power has been transferred by such control to receive the predetermined unit of computational power indicated by such a computational power token.

In this manner, in Step S9, the computational power is provided from the computational power owner O to the computational power user U. From computational power user U's point of view, when receiving the provided computational power, the computational power user U can receive the computational power as in Step S10, and thereafter utilize the computational power.

In Step S11, the server 1 executes processing of paying a price (for example, point) for the computational power provided to the computational power user U from the fund entered by the computational power user U to the computational power owner O.

In this manner, in Step S12, the computational power owner O can receive the price for the computational power provided to the computational power user U.

As described above, according to the present service, the server 1 mediates (matches) the sales transaction of the computational power between the computational power owner O who provides the computational power and the computational power user U who requires the computational power, evaluates the value of the computational power provided from the computational power owner O, issues the computational power token with such a value, and causes the computational power user U to make the sales transaction in units of computational power token, and therefore, it is possible to improve convenience in provision, utilization, and management of a computational resource.

Next, the configuration of the information processing system implementing provision of the present service described above, i.e., the information processing system including the server according to one embodiment of the information processing device of the present invention, will be described with reference to Fig. 2. Fig. 2 is a diagram showing one example of the configuration of the information processing system including the server according to one embodiment of the information processing device of the present invention.

The information processing system shown in Fig. 2 includes the server 1, a user terminal 2, and an owner terminal 3. The server 1, the user terminal 2, and the owner terminal 3 are connected to each other via a predetermined network NW such as the Internet.

The server 1 is the information processing device managed by the service provider. The server 1 executes various types of processing for implementing the present service while communicating with the user terminal 2 and the owner terminal 3 as necessary.

The user terminal 2 is an information processing device to be operated by the computational power user U. Examples of the user terminal 2 include a smartphone, a tablet, a personal computer, and the like. The owner terminal 3 is an information processing device to be operated by the computational power owner O. Examples of the owner terminal 3 include a smartphone, a tablet, a personal computer, and the like.

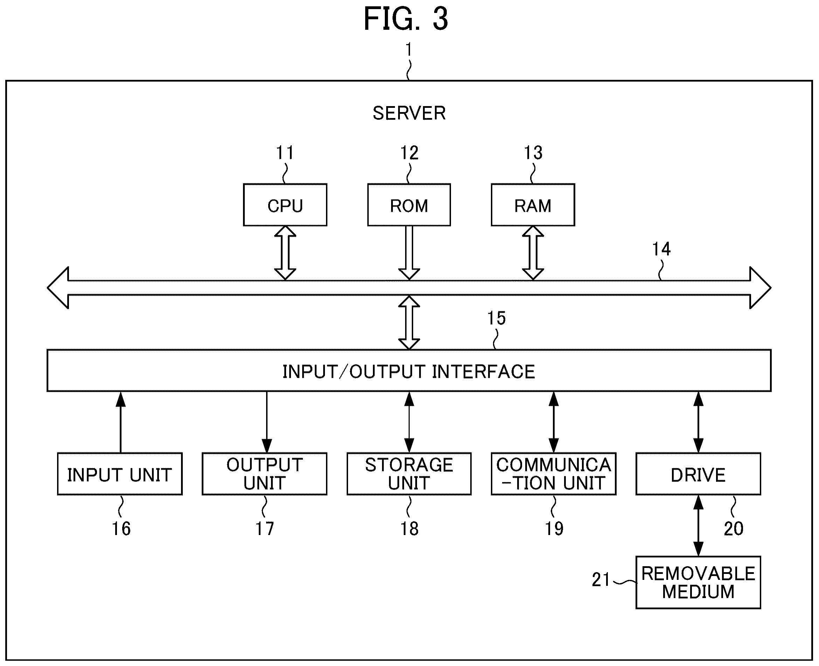

Fig. 3 is a block diagram showing one example of a hardware configuration of the server of the information processing system shown in Fig. 2.

The server 1 includes a central processing unit (CPU) 11, a read only memory (ROM) 12, a random access memory (RAM) 13, a bus 14, an input/output interface 15, an input unit 16, an output unit 17, a storage unit 18, a communication unit 19, and a drive 20.

The CPU 11 executes various types of processing according to a program recorded in the ROM 12 or a program loaded from the storage unit 18 to the RAM 13. The RAM 13 also stores, as necessary, data and the like necessary for executing various types of processing by the CPU 11.

The CPU 11, the ROM 12, and the RAM 13 are connected to each other via the bus 14. Moreover, the input/output interface 15 is also connected to the bus 14. The input unit 16, the output unit 17, the storage unit 18, the communication unit 19, and the drive 20 are connected to the input/output interface 15.

The input unit 16 includes, for example, a keyboard and the like, and various types of information are input via the input unit 16. The output unit 17 includes a display such as a liquid crystal display, a speaker, and the like, and various types of information are output as an image or sound via the output unit 17. The storage unit 18 includes a dynamic random access memory (DRAM) or the like, and stores various types of data. The communication unit 19 communicates with other devices (for example, the user terminal 2 and the owner terminal 3) via the network NW including the Internet.

A removable medium 21 including a magnetic disk, an optical disk, a magnetic optical disk, a semiconductor memory, or the like is attached to the drive 20, as necessary. A program read from the removable medium 21 by the drive 20 is installed in the storage unit 18, as necessary. Moreover, the removable medium 21 can also store various types of data stored in the storage unit 18, similarly to the storage unit 18.

Note that although not shown, the user terminal 2 and the owner terminal 3 shown in Fig. 2 can have configurations basically similar to the hardware configuration shown in Fig. 3. Thus, description of hardware configurations of the user terminal 2 and the owner terminal 3 will be omitted.

By cooperation of various types of hardware and various types of software forming the information processing system of Fig. 2 including the server 1 as in Fig. 3, various types of processing of performing the sales transaction of the computational power between the user terminal 2 and the owner terminal 3 can be executed. As a result, the service provider S can provide the above-described present service to the computational power user U and the computational power owner O.

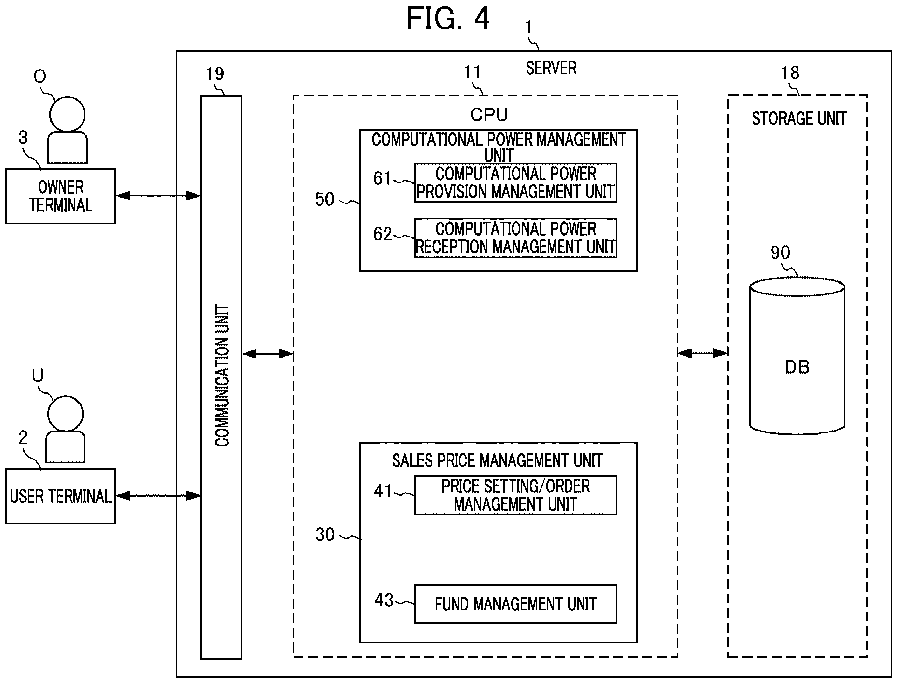

Fig. 4 is a functional block diagram showing a functional configuration example of the server of Figs. 2 and 3. As shown in Fig. 4, the storage unit 18 of the server 1 stores a database 90 (hereinafter referred to as a "DB 90"). The DB 90 stores information (name, fund entered, computational power token, point balance, computational power which can be provided, and the like in association with an account (ID) utilized for the transaction) regarding the computational power transaction, which includes individual information provided or entered from each of the computational power owner O and the computational power user U. The DB 90 stores a predetermined value, such as a point, evaluated for the right to utilize the predetermined unit of computational power defined by "information regarding the computational power" provided from the computational power owner O. The "information regarding the computational power" is a plurality of indices (for example, electricity, hardware, software, data, and the like) forming the computational power. According to the evaluated point, the DB 90 stores the computational power token issued to the computational power owner O in order to cause the computational power owner O to enforce one's right. The computational power token is used for the sales transaction of the computational power. The DB 90 stores information indicating a correspondence relationship between the computational power token and the point obtained by evaluating such a computational power token. In a case where a plurality of computational power tokens with the same index (for example, same specifications) are transacted (utilized) in the transaction, the DB 90 stores a priority condition for executing control of causing the computational power user U to receive a predetermined unit of computational power with priority given to a computational power token with a high predetermined priority defined in advance among the plurality of computational power tokens. The condition for the computational power token with the high predetermined priority is, for example, a computational power token registered as a resource first by the computational power owner O or the like. Alternatively, a condition other than above may be applied.

As shown in Fig. 4, in the CPU 11 of the server 1, when the processing related to the sales transaction of the computational power is executed, a sales price management unit 30 and a computational power management unit 50 function.

The sales price management unit 30 includes a price setting/order management unit 41 and a fund management unit 43. The price setting/order management unit 41 executes processing of evaluating the value of a computational power token for using a predetermined unit of computational power (for example, computational power which can be provided from the computational power owner 0) defined by a plurality of elements (indices) provided from the computational power owner O and then selling and buying the computational power token at the evaluated value.

Moreover, the price setting/order management unit 41 evaluates the value of a sold computational power token based on a predetermined bidding condition. In this manner, the evaluated value is reflected in the future on evaluation of a computational power newly provided from the computational power owner O. Thus, when the evaluation on the sold computational power token increases, the evaluation on the computational power owner O can be improved, and the value (price) of the computational power provided by the computational power owner O can be increased. The price setting/order management unit 41 may take a token typified by a point or the like as the unit of transaction.

The price setting/order management unit 41 selects a computational power token that satisfies the condition specified by the computational power user U, and recommends such a computational power token to the computational power user U. In this manner, the computational power user U can easily find a computational power token including a desired computational power without the need for checking, by oneself, the contents of computational power tokens that are slightly different to each other in computational power contents one by one among many computational power tokens listed for sale. Note that as the recommendation function, the server 1 may be installed in advance with search software, simulation software, or the like, and in response to an instruction from the price setting/order management unit 41, may operate such software to select computational power token candidates from the DB 90.

The fund management unit 43 executes processing of payment for the computational power token purchased by the computational power user U to the computational power owner O. Specifically, the fund management unit 43 manages, for each account, the fund entered from the computational power user U, the payment (price) made from the fund for purchasing the computational power, a balance obtained by subtracting the payment from the fund, the amount of money acquired by the computational power owner O having received the payment, and the like.

The computational power management unit 50 provides the computational power to the computational power user U that satisfies the condition (entry of the computational power token) specified by the computational power owner O. In a case where computational power tokens having at least some of the computational power elements (indices) which are the same as each other are (sold and) utilized, the computational power management unit 50 executes control of causing the computational power user U to receive a computational power token (predetermined unit of computational power) purchased by such a computational power user U with priority given to the computational power owner O of a predetermined computational power token defined in advance among the plurality of computational power tokens. The computational power token with a high predetermined priority is, for example, a computational power token of the computational power owner O who has registered the computational power token as a resource first or the like. Note that not only may the priority be given to the computational power owner O side, but also priority may also be given to the computational power user U side. The computational power management unit 50 may take a token typified by a point or the like as the unit of transaction.

The computational power management unit 50 includes a computational power provision management unit 61 and a computational power reception management unit 62. The computational power provision management unit 61 manages the computational power provided from the computational power owner O. Specifically, the computational power provision management unit 61 receives the "information regarding the computational power" which is the contents of the computational power provided as described above by the computational power owner O. The received contents are stored in the DB 90, and are shared to be available for other units.

The computational power reception management unit 62 provides the computational power equivalent to the computational power token purchased by the computational power user U to the computational power user U via the computational power owner O.

As described above, according to the configuration of the server 1 of the first embodiment, the server 1 issues the computational power token with the value obtained by evaluating, according to the certain criterion, the predetermined unit of computational power defined by the plurality of indices (for example, electricity, hardware, software, data, and the like) provided from the computational power owner O, and performs the sales transaction of such a computational power token, so that the computational power owner O can freely provide an available amount of computational power. Moreover, the computational power user U can purchase and utilize the computational power of desired quality and amount by the sales transaction of the computational power token. As a result, it is possible to improve convenience regarding utilization of the computational power, which includes provision, utilization, management, and the like of the computational resource by both the computational power owner O and the computational power user U.

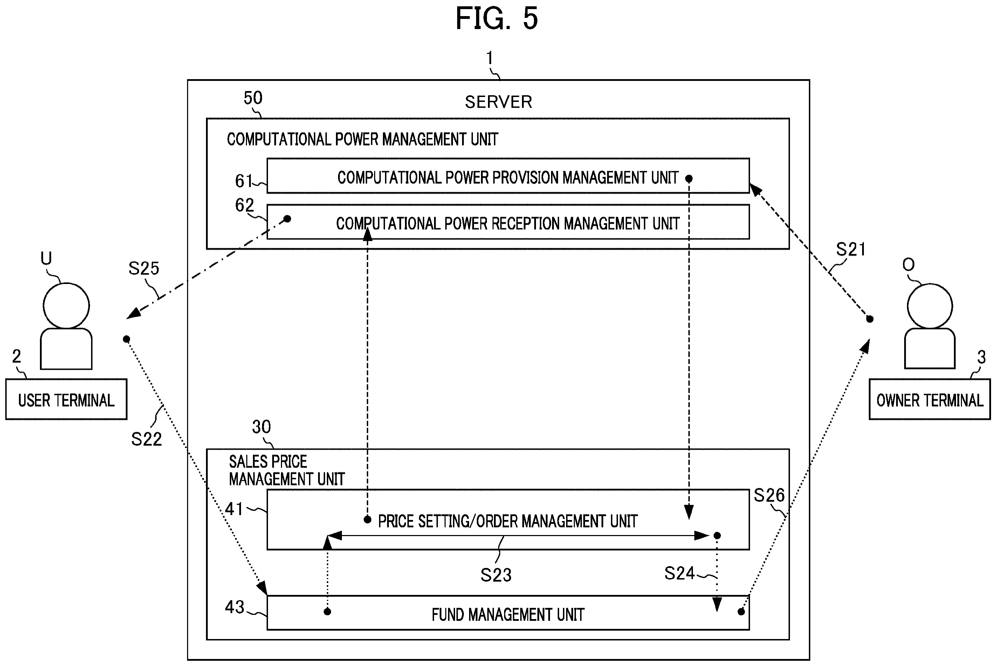

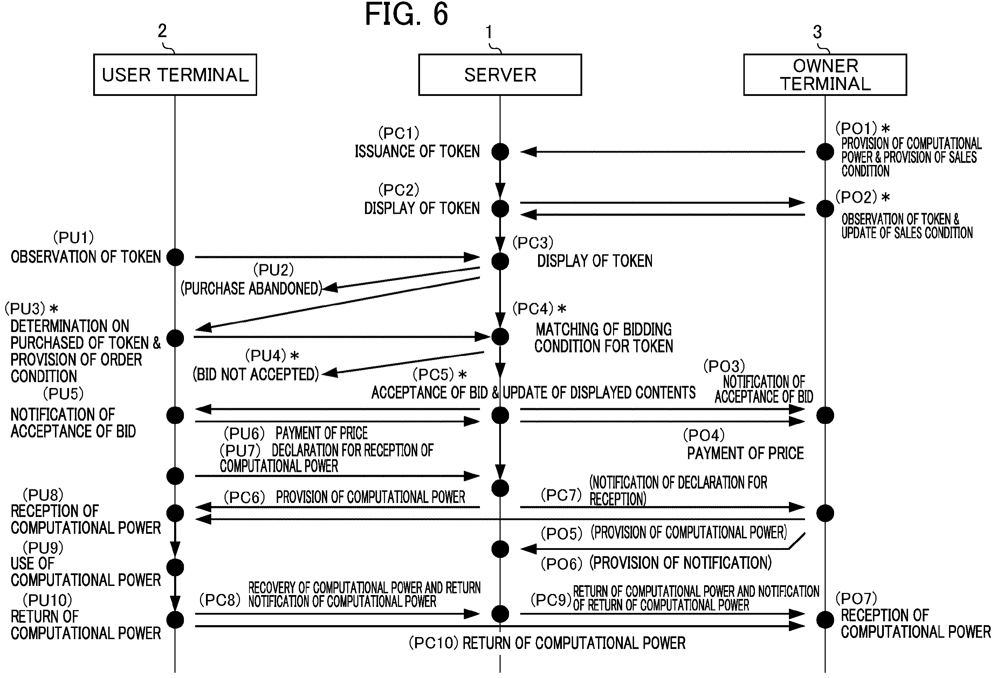

Subsequently, operation of the server of the first embodiment will be described with reference to Figs. 5 and 6. Fig. 5 is a diagram for describing the flow of the computational power transaction in the server having the functional configuration (first embodiment) of Fig. 3. Fig. 6 is an arrow chart showing details of the flow of the computational power transaction of Fig. 5.

In the case of the server of the first embodiment, in Step S21 shown in Fig. 5, when the computational power is provided from the owner terminal 3 to the server 1 in response to operation by the computational power owner O, the server 1 receives such a computational power by the computational power provision management unit 61. Providing the computational power may be bringing the components of the computational power into a state of the computational power being available. Alternatively, such provision may be bringing the components of the computational power into a state of the computational power user U being able to use these components at predetermined date and time in the future or in a predetermined period in the future according to a contract or the like. Bringing the components of the computational power into the state of the computational power user U being able to use these components includes, for example, a contract on transmission and reception of an electricity system, provision of a power generation device of a power generation facility, a power storage facility, or the like, provision of a server, provision of a component of a server, such as a CPU or a GPU, provision of a server usage method such as issuance of an SSH key, provision of software, issuance of a software license, provision of data, provision of security such as locking/unlocking of a related item, and the like. The computational power provision management unit 61 receives the above-described contents provided by the computational power owner O. The received contents are stored in the DB 90, and are shared with the sales price management unit 30. Here, sharing indicates that the computational power provision management unit 61 notifies the sales price management unit 30 of provision of the information on the computational power from the computational power owner O and the contents thereof are brought into a readable state from the DB 90 by the sales price management unit 30 as needed. At this time, a sales condition such as an asking sales price for the computational power provided by the computational power owner O may be received. The sales price management unit 30 issues the computational power token indicating the contents of the provided and shared computational power. The computational power token is preferably electronic. Specifically, information on issuance of the computational power token is shared with the price setting/order management unit 41. The computational power token includes the asking sales price provided by the computational power owner O.

In Step S22, the computational power user U operates the user terminal 2 to transmit the fund for purchasing the computational power via the user terminal 2 and enter the fund into the server 1. In the server 1, the fund management unit 43 receives the fund transmitted from the user terminal 2. At this time, the fund management unit 43 receives a contract for sending and receiving cash or money and the amount thereof. The received information such as the amount of money is stored in the DB 90, and a location where such information is stored is notified to and shared with the price setting/order management unit 41 of the sales price management unit 30. At the time of entry of the fund, the computational power user U can specify, as necessary, a computational power purchasing condition (for example, minimum requirement and desired condition for each component, desired date and time or period of use of the computational power, and the like). These types of information are also stored in the DB 90, and are shared with the sales price management unit 30.

In Step S23, in the sales price management unit 30, the price setting/order management unit 41 determines the sales price by a predetermined method based on the shared information (contents) on the computational power, and matches the sales price with the amount of money received separately. As determination of the sales price, for example, an absolute fixed price may be set in advance by quantitative and qualitative evaluation on the provided computational power, or a relative price may be determined by comparison with plural other computational powers received at a certain point of time. For matching, it is not necessary to take only the amount of money as a matching requirement for the components of the computational power, and matching may proceed with a limitation on each component of the computational power, such as a minimum requirement or a desired condition. In this case, for example, the price setting/order management unit 41 discloses the contents of the provided computational power to the computational power user U, and receives quantitative and qualitative evaluation on the provided computational power by the computational power user U, so that the matching processing can be executed in consideration of the limitation. As a result, in a case where there is matching between the computational power and the amount of money, the sales of the computational power are closed.

In Step S24, since the sales of the computational power are closed, i.e., the computational power is sold, the price setting/order management unit 41 shares the contents of matching with the computational power reception management unit 62.

In Step S25, the computational power reception management unit 62 notifies the user terminal 2 of the computational power having been sold, and the computational power reception management unit 62 provides the computational power, so that the computational power user U can receive such a computational power. In this manner, the computational power user U can perform the computation with the received computational power. Note that the computational power may be directly provided from the computational power owner O as necessary, and in this case, in the computational power provision management unit 61 and the computational power reception management unit 62, a notification of direct provision of the computational power from the computational power owner O to the computational power user U is made. Note that in a case where a computational power which can be used at predetermined date and time in the future has been sold, the computational power is provided at such date and time for use. That is, a computational power which can be used in a predetermined period in the future is provided at proper timing according to a policy set by the computational power owner O at the time of provision of the computational power and date and time/period desired by the computational power user U.

In Step S26, the fund management unit 43 pays the price to the computational power owner O based on the contents of the matching made. In this manner, the computational power owner O can receive the price paid from the fund management unit 43.

The flow of the present service by the server 1 has been described above with the procedure from Steps S21 to S26 as an example. Specifically, the present service can be provided by the server 1 according to a series of processing such as provision of the computational power from the computational power owner O, reception of the computational power by the computational power user U, reception of the price from the computational power user U, payment of the price to the computational power owner O, and the like.

Here, processing of determining the sales price (selling price) for the computational power token in the flow of the transaction of the computational power will be described with reference to Fig. 6.

First, in the server 1, in Step P01, the computational power information (contents of the computational power), the sales condition, and the selling price provided by the computational power owner O are registered in the DB 90. As the selling price, a fixed price may be set as in a limit order, or as in a market order, an arbitrary price or more (for example, 100 points or more, 0 points or more, or the like) may be set such that the transaction can proceed when the computational power user U as a buyer arises. In the computational power token, a computational power enforcement condition (including a period, the time of start, and the like) is also described. In a case where environment for the computational power user U as the buyer is selected depending on a physical/legal limitation (network issues, export control issues, or the like) or the like, a purchase condition for the buyer may be provided such that the transaction is not closed only according to a price.

In Step PC1, the computational power token can be issued by the above-described registration processing. Specific contents of the computational power are described in the computational power token, and the selling price is set. When computational power tokens are collected from various computational power owners O, the plurality of computational power tokens is displayed (processing of sorting the computational power tokens in order according to a certain index (the order of reception, the order of price, or the like)) in the server 1 in Step PC2. This information can be observed by the computational power owner O. As necessary, in Step PO2, the computational power token can be observed, and the sales condition can be updated. In this manner, with reference to many computational power tokens of the market, the displayed computational power token of the computational power owner O can be withdrawn, the contents of the computational power token can be changed (withdrawn and re-registered), the selling price can be revised, or the like.

The computational power user U observes the computational power token at arbitrary timing in Step PU1, and examines the contents of the displayed computational power token in Step PC3. As a result of examination by the computational power user U, if there is no computational power token matching desired contents, the purchase is abandoned, and the transaction ends in Step PU2. On the other hand, in a case where there is the computational power token matching the desired contents, the purchase of the computational power token is determined and an order condition is provided in Step PU3, and matching of the bidding condition for the computational power token is made in Step PC4. Basically as matching of the bidding condition for the computational power token, the price is provided, and it is mechanically determined whether or not the bid is accepted. However, in a case where there is the purchase condition for the buyer, a response regarding these contents is obtained from the computational power user U in the processing of Step PU3, and by the server 1 or the computational power owner O, it is determined whether or not the bid is accepted. As a result of determination, in a case where the bid is not accepted, the transaction ends in Step PU4.

Thereafter, since the bid is accepted and the display contents are updated in Step PC5, the bid is confirmed and the sold computational power token is deleted from the displayed contents. At the same time, acceptance of the bid is notified in Step PU5 and in Bid Acceptance Notification Step PO3 to the computational power user U and the computational power owner O. At the same time, the price is paid between the computational power user U and the server 1 in Step PU6, and the price is paid between the server 1 and the computational power owner O in Step P04.

In Step PU7, based on the computational power enforcement condition described in the computational power token, the computational power user U makes a declaration for reception of the computational power. At this time, for contents (for example, provision of VM environment, provision of data, electricity and a line after arbitrary setting, and provision of cloud environment) for which the transaction can systematically start by the server 1, the computational power is provided from the server 1 in Step PC6. For contents (for example, physical item rental, provision of cloud environment whose connection availability is managed by the computational power owner O, physical locking/unlocking operation, or the like) for which the transaction cannot systematically start in the server 1, the computational power is provided in the course of (notification of declaration for reception) in Step PC7 from the server 1 to the computational power owner O, (provision of computational power) in Step P05 from the computational power owner O to the computational power user U, and (provision of notification) in Step P06 from the computational power owner O to the server 1.

Thereafter, in Step PU8, the computational power user U receives the computational power, and in Step PU9, uses the computational power. After use, in Step PU10, the computational power user U returns the computational power. Regarding return, for contents (for example, cloud environment, license software, or the like expired at a certain date and time or the like) for which the transaction can systematically end in the server 1, in Step PC8, the server 1 provides a recovery of the computational power and a return notification of the computational power to the computational power user U, and in this manner, notification or recovery from the computational power user U to the server 1 is performed.

In the server 1, in a case where the return to the computational power owner O is necessary (for example, a license for the license software is recovered or the like), the server 1 provides returns of the computational power and notifications of returns of the computational power to the computational power owner O to the computational power owner O in Step PC9.

After notification, in Step P07, the computational power owner O receives the computational power, and then, the processing is completed. At this time, for contents consumed by the computational power user U, such as electricity, only notification is made. On the other hand, in a case where there are contents (for example, item rental or the like) which need to be directly returned from the computational power user U to the computational power owner O because the transaction cannot systematically end, the computational power is returned in Step PC10, and in this manner, the computational power is returned from the computational power user U to the computational power owner O. Thereafter, the returned computational power can be provided again from the computational power owner O to the server 1. By the steps described above, the computational power is transacted.

Here, price determination processing in the transaction of the computational power of Fig. 6 above will be described. In the transaction of the computational power, the price can be determined by an auction. In the case of the auction (portions indicated by * in Fig. 6), the computational power owner O can provide the computational power and provide the sales condition in Step PO1, or in the case of observing the computational power token and updating the sales condition, can register a desired condition (desired minimum price, auction period, or the like) before the auction in Step PO2.

In Step PC4, in matching of the bidding condition for the computational power token, the server 1 receives a bid (order condition provided) from the computational power user U in a preset period. That is, in Step PU3, in determination on the purchase of the computational power token and provision of the order condition, a condition desired by the computational power user U is sent to the server 1. As in a general auction, in the preset period, conditions desired by a plurality of computational power users U are received, the current highest value is disclosed, a desired condition is received multiple times from the same computational power user U, and the like, so that the desired condition is received across a wide range. At the end of the period, the bid is confirmed for the computational power user U providing the highest value, and in Step PC5, the bid is accepted and the displayed contents are updated. In Step PU4, the other computational power users U end the transaction because the bids are not accepted. Also, in a case where there is no computational power user U, the transaction ends.

In the auction for the computational power, depending on the attribute (industrial user, academic user, public user, or the like) or geographical environment of the computational power user U who may be an auction winner, a general price for use of the computational power in each field, laws and regulations regarding a line communication speed or data, or the like may vary. In this case, the computational power owner O can limit the attribute or environment of the computational power user U, or can set a desired price in a stepwise manner in Step PO1 and Step PO2. Such a setting may be individually made so as to be included in the condition at the time of the auction, or may be made by setting an additional fee or an additional process after acceptance of the bid as necessary in Step PO1 and Step PO2.

By such a setting method, the transaction of the computational power can be smoothly performed while handing the attributes and environment of a variety of computational power users U, and a wide range of computational power users U and computational power owners O can be accepted. Since the price is determined by the auction, a suitable price of the computational power can be determined according to supply and demand balance.

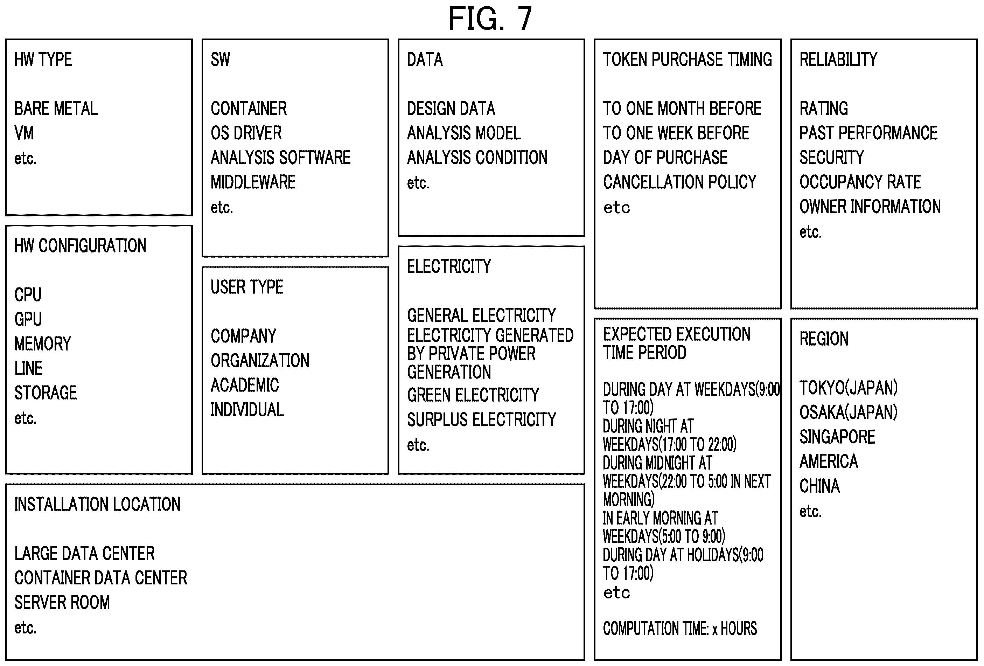

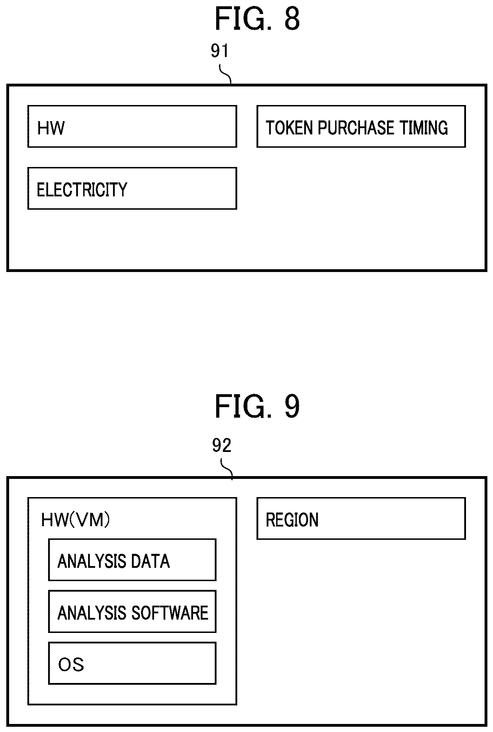

Next, the components of the computational power token will be described with reference to Figs. 7 to 9. Fig. 7 is a diagram showing one example of the components of the computational power token. Figs. 8 and 9 are diagrams showing one example of the computational power token in which desired components of the computational power are described among the components of Fig. 7. The components of the computational power token are individual definitions of items, information, and the like essential or desirably used for executing the computation.

Specifically, as shown in Fig. 7, the components of the computational power token can be set and categorized into, for example, electricity, hardware (HW), software (SW), data, a region, a user type, token purchase timing, an expected computation execution time period, reliability, and the like. The computational power token has a function as a bill indicating the contents provided by the computational power owner O, and a transfer contract is concluded as a result of buying and selling of the computational power token.

The computational power owner O can include many owned computational resources in the computational power token in a freely-set unit at a freely-set quantity, and for example, a node of an HW 32-core server 1 may be configured as one HW 32-core computational power token, or may be configured as eight HW 4-core computational power tokens on the assumption of use by a virtual machine (VM) or a container.

The computational power token may be created for each category based on an item or information of a single category according to the contents provided by the computational power owner O, or may be created by combining items or information of a plurality of categories. For example, an arbitrary node of the server 1 may be configured as one HW computational power token, or may be configured as one HW+SW computational power token in a case where the computational power owner O sets an OS or a driver in advance to limit use.

By taking the computational power token of the single category as an example, specific features of the components of such a computational power token can be described in the computational power token as a reference when the computational power user U selects the computational power token. Hereinafter, one example of contents which can be described in the computational power tokens of the electricity, the hardware (HW), the software (SW), the data, the region, the user type, the token purchase timing, the expected computation execution time period, and the reliability will be described.

### Electricity

A power generation method can be described. Examples include general electricity purchased from an electricity sharing company, electricity generated by private power generation with one's own equipment, such as solar power generation, green electricity such as wind power, solar light, or wave power, and the like. A payment structure can be described. Examples include a price change, dynamic pricing, and the like according to a use application, a capacity, time, and the like. Supply stability can be described. Examples include prediction of a power generation amount based on hours of sunlight in the case of solar power, prediction of electricity shortage in a jurisdiction area for the general electricity.

### Hardware (HW)

A machine can be described. Examples include the specifications/quantity/use history of a CPU, a GPU, a memory, or the like, the specifications of a storage device such as an HDD or an SSD, and the like. An Internet line can be described. For example, the specifications of an installed line of a LAN or the like, a service provider, the presence or absence of a VPN, and the like.

### Software (SW)

An OS can be described. The OS may be software to be used by the user, and may be Linux or Windows, for example. Note that Linux and Windows are registered trademarks. A driver can be described. Examples include a driver for using some kinds of HW or SW and the like. Analysis software can be described. Examples may include software operated for simulation on an OS and software for machine learning. Middleware can be described.

### Data

Design data can be described. Examples include data used for simulation, such as a drawing, and various types of data used for machine learning, such as an image and audio. An analysis model can be described. The analysis model is a mode for defining various physical phenomena in simulation, or a model used for machine learning such as deep learning. An analysis condition can be described. Examples include various conditions when simulation or machine learning is executed, and the like.

### Token Purchase Timing

The token purchase timing can be described. The token purchase timing may be dynamic pricing based on a time period from the expected date of execution of the computation, such as three months before, one month before, one week before, or the day of execution. A cancellation policy may be provided, and the offered price may be changed based on whether or not the purchase of the computational power token can be cancelled before execution of the computation. Such cancellation includes that in a case related to cancellation due to the convenience of the computational power user U and that in a case related to cancellation due to the convenience of the computational power owner O.

### Expected Execution Time Period

A time period for which the computation is executed can be described. In a period (9:00 to 17:00) during the day, a period (17:00 to 22:00) during the night, a period (22:00 to 5:00 in the next morning) during the midnight, or a period (5:00 to 9:00) in the early morning at weekdays or holidays, the price may be changed or dynamic pricing may be applied according to demand.

### Reliability

Security can be described. Specifically, examples include physical security for the server itself, security regarding software and virtual environment, security regarding communication, and the like. Moreover, rating can be described. The rating includes, for example, the computation capability of the server itself, the speed of communication, the robustness of the security, and the like. Past performance can be described. Moreover, the percentage of use in the past, a computation speed, a communication speed, and the like achieved in the past, and an occupancy rate can be described. The occupancy rate is, for example, time for which the server continuously operates without electricity outage or the percentage of operation in a proper temperature or humidity state. Owner information can be described. Examples include ownership by an individual, a company, a research institution, a university, and the like.

### User Type

A target user such as a company, an academic, or an individual can be described. In the case of the academic, the price is determined according to the user type, such as a lower price than a general price.

### Region

A server installation location can be described. Examples include Japan (Tokyo, Osaka, or the like), America, Singapore, China, and the like.

Here, examples of the computational power token will be described with reference to Figs. 8 and 9. In a computational power token 91 of the example of Fig. 8, a machine with specifications demanded by the user, electricity for operating the machine, and the token purchase timing are described. In a computational power token 92 of the example of Fig. 9, an item installed with a VM in a machine and including an OS, analysis software, and analysis data in the VM and a region for the item are described. The computational powers of the computational power tokens 91, 92 as shown in the examples of Figs. 8 and 9 are provided so that the computational power user U can easily use the computational powers. Moreover, the above-described contents are described in the computational power token so that the transaction between the computational power owner O and the computational power user U can be smoothly made. Note that even when the same HW/electricity as that of the computational power token 91 of the example of Fig. 8 is specified, the offered price may vary between one month before and one week before in terms of the token purchase timing. Similarly, even when the same VM/analysis data/analysis software/OS as that of the computational power token 92 of the example of Fig. 9 is specified, the amount of money changes as the region changes.

The price for this computational power token is determined by the above-described price setting/order management unit 41. At this time, the prices or values for the items included in the categories of the computational power token are integrated, and such an integrated value is taken as the price for the computational power token.

For example, in a case where the computational power user U who wants to promptly use HW with a high computation capability purchases the computational power token, one with a high performance is selected from the items included in the category of the HW. The price for this item varies according to the performance of the HW, and generally increases as the performance increases. Even in the case of servers with the same function, the price may vary depending on a vender of the HW or the like.

Next, reservation timing is the day of reservation or the most recent date. The price may increase as the degree of freedom in the date and time as this reservation timing decreases, and conversely, may decrease as the date is set to a more future date. Finally, the computation is executed in the most recent time period at the reserved date and time as the expected day of execution of the computation. The price increases as more users want to use the computational device in the time period at this expected day of execution. If the most recent time period in which the computational device is to be utilized is a peak hour, a high price needs to be paid.

As a different example, in a case where the computational power is reserved for a future date in units of several months, the timing of purchasing the item included in the computational power token is several months ahead, and for this reason, the computational power token can be purchased at a relatively-low price. In addition, the expected execution timing is set so as to avoid a peak hour, so that the computational power token can be purchased at a low price.

As a different example in terms of the electricity, for example, the computational power user U who desires the green electricity is assumed. In terms of the superiority of the business of the computational power user U or the like, in a case where execution of the computation with the green electricity is assumed as an additional value, the computational power token is assumed to be purchased at a higher price than that of the general electricity. On this point, the computational power owner O sets a higher price for the green electricity, and sets a lower price for the general electricity. Alternatively, in a case where surplus electricity is used for the green electricity, the price for the electricity is lower than the price for the general electricity. In this case, by selecting the green electricity, the price decreases.

As described above, the price is determined by integration of the prices for the items included in the computational power token. At this time, for the price for the item itself, a price equivalent to a prime cost is determined by the provider of each item, and the computational power owner O who consolidates these items and categories adds one's own benefit or the like to obtain the price for the computational power token.

For example, the elements which can be used for the HW type category and price determination are assumed as follows. Bare metal, a virtual machine (VM), physical rental, and the like are assumed. For example, for the VM and the bare metal which can be used with a high convenience via communication, the bare metal can be provided at a lower price in a case where the computational power owner O more easily sets the bare metal in advance than the VM. For example, in a case where the computational power owner O who owns plural types of machines sets each machine as a single VM to reduce a cost, the VM can be provided at a low price. For example, the HW configuration category is assumed to be a CPU (vCPU) and the number of cores, the number of clocks, power consumption, a heat generation amount, the number of threads, an architecture, and the like forming the CPU. A memory and a capacity, a reading/writing speed, and a cache configuration forming the memory are assumed. A storage and a capacity, a reading/writing speed, a magnetic disk, a flash memory, and a raid setting forming the storage are assumed. A CPU and a stream core, the number of clocks, a memory bandwidth, a memory access speed, a connection method such as PCIe, a network connection method such as Ethernet or Infiniband, the number of threads, an architecture, power consumption, and a heat generation amount forming the GPU are assumed. A line and a transmission/reception speed, a compliant communication standard, a cable length, a service provider, and a VPN setting forming the line are assumed. Manufacturers, the dates of manufacturing, manufacturing locations, and the like for the above-described items are assumed, and the prices therefor are integrated. Note that all these categories are not necessarily required. In some cases, only some of these categories may form the computational power token.

For example, in the case of the SW category, a container and an algorithm, a library, a programming language, middleware, a driver, an API, and the like forming the container are assumed as the item. An OS and a library, a BIOS, a kernel, a programming language, middleware, a driver, an API, and the like forming the OS are assumed. A driver and a version, a supported OS, supported HW, a developer, and the like forming the driver are assumed. Analysis software and a version, a supported OS, supported HW, a developer, and the like forming the analysis software are assumed. Middleware and a version, a supported OS, supported HW, and a developer forming the middleware are assumed. The prices therefor are integrated. Note that all these categories are not necessarily required. In some cases, only some of these categories may form the computational power token.

For example, in the case of the data category, design data and dimension data, material data, environmental data, operation data, and the like forming the design data are assumed as the item. An analysis model and a finite element model, a particle model, a trajectory model, a probability model, a distribution model, a learning model, and the like forming the analysis model are assumed. An analysis condition and an input/output condition, an integration condition, and the like forming the analysis condition are assumed. A creator, a creation date, an academic citation, and the like for above are assumed. The prices therefor are integrated. Note that all these categories are not necessarily required. In some cases, only some of these categories may form the computational power token.

For example, the elements which can be used for the electricity category and price determination are assumed as follows. General electricity, electricity generated by private power generation, green electricity, surplus electricity, and the like are assumed. For example, in the case of the installation location category, a large data center and the number of racks, a security level, a line, an electricity amount, a support level, a floor configuration, air-conditioning, a site location and a foothold, a governing organization, and the like forming the large data center are assumed as the item. A container data center and the number of racks, a security level, a line, an electricity amount, a support level, a floor configuration, air-conditioning, a site location and a foothold, a governing organization, and the like forming the container data center are assumed. A server room and the number of racks, a security level, a line, an electricity amount, a support level, a floor configuration, air-conditioning, a site location and a foothold, a governing organization, and the like forming the server room are assumed. The prices therefor are integrated. Note that all these categories are not necessarily required. In some cases, only some of these categories may form the computational power token.

For example, the elements which can be used for the category of the type of computational power user U and price determination are assumed as follows. A company, an organization, an academic, an individual, other conditions (purpose for use of the computational power, contract requirement, and the like) for the computational power user U, and the like are assumed. For example, as the elements which can be used for the token purchase timing category and price determination, for example, one month before, one week before, the day of purchase, other conditions (determination condition for use/non-use, cancellation policy, and the like) regarding use of the computational power, and the like are assumed. For the cancellation policy, cancellation due to the convenience of the computational power owner O, cancellation due to the convenience of the computational power user U, and cancellation due to an inevitable reason (natural disaster or the like) are conceivable as a reason for cancellation as the cancellation due to the convenience. For example, the price can be set high in a case where compensation for cancellation due to the convenience of the computational power owner O is generous, and can be set low in a case where the compensation is ungenerous or there is no compensation. For example, the elements which can be used for the category of the expected execution time period and price determination are assumed as follows. A period (for example, 9:00 to 17:00) during the day at weekdays, a period (for example, 17:00 to 22:00) during the night at weekdays, a period (for example, 22:00 to 5:00 in the next morning) during the midnight at weekdays, a period (for example, 5:00 to 9:00) in the early morning at weekdays, a period (for example, 9:00 to 17:00) during the day at holidays, a period (for example, 17:00 to 22:00) during the night at holidays, a period (for example, 22:00 to 5:00 in the next morning) during the midnight at holidays, a period (for example, 5:00 to 9:00) in the early morning at holidays, computation time: x hours (for example, six hours of 24 hours of an arbitrary date), other values indicating a point of time and time, and the like are assumed.

For example, the elements which can be used for the reliability category and price determination are assumed as follows. Rating and the computation capability of the server itself, the speed of communication, the robustness of security, and the like forming the rating are assumed. Past performance and the percentage of use in the past, a computation speed and a communication speed achieved in the past, and the like forming the past performance are assumed. Security and the physical security of the server itself, security regarding software and virtual environment, security regarding communication, and the like forming the security are assumed. An occupancy rate and time for which the server continuously operates without electricity outage, the percentage of operation in a proper temperature or humidity state, and the like forming the occupancy rate are assumed. Owner information and ownership by an individual, a company, a research institution, and a university, other conditions (purpose for use of the computational power, contract requirement) defined by the computational power owner O, and the like forming the owner information are assumed. For example, the elements which can be used for the region category and price determination are assumed as follows. Symbols, names, and the like indicating Tokyo (Japan), Osaka (Japan), Singapore, America, China, and other locations are assumed.

The item provider is, for example, an electricity producer in the case of the electricity, and the prime cost is an electricity price or the like. In the case of the HW, the item provider is an HW vender or agent such as a chip manufacturer or a system integrator, and the prime cost is an HW price or the like. For the other items, prices paid when the computational power owner O obtains these items are equivalent to prime costs.

In some cases, the computational power user U purchases the computational power token at a certain price if the computational power user U agrees with such a price, but in other cases, the computational power owner O adjusts the price set on the computational power user U side to make the transaction. This is equivalent to the transaction of the limit order or market order in the above-described order management. Other than above, there may be dynamic price fluctuation and a static price setting method. These are similar to a current stock transaction.

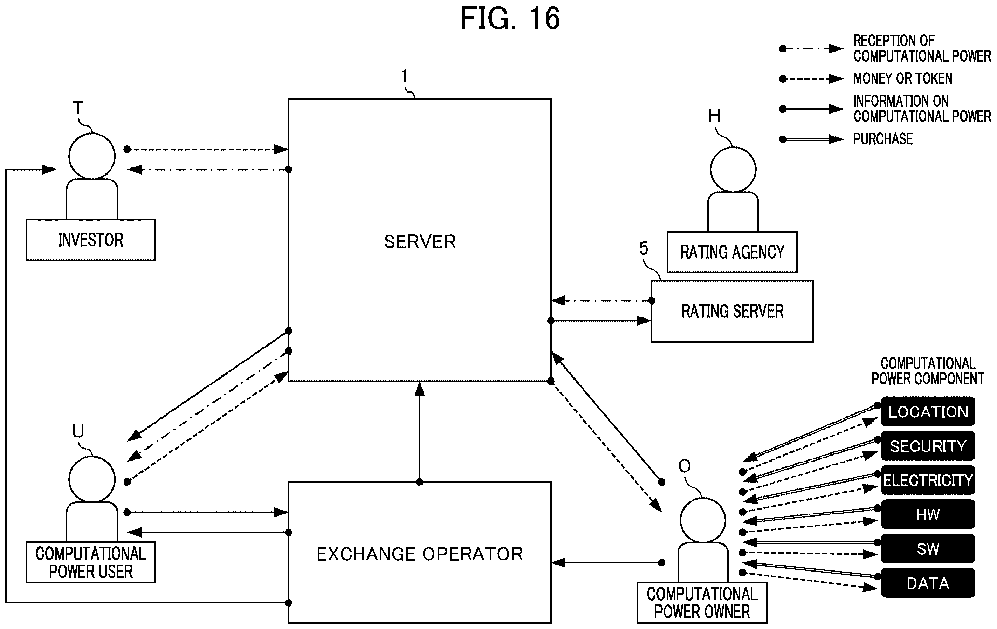

These computational power tokens may be purchased in a case where the user purchases and uses the computational power, but also may be purchased by a third party for the purpose of reselling the computational power token. This case will be described later as an example of an investor (see Fig. 16).

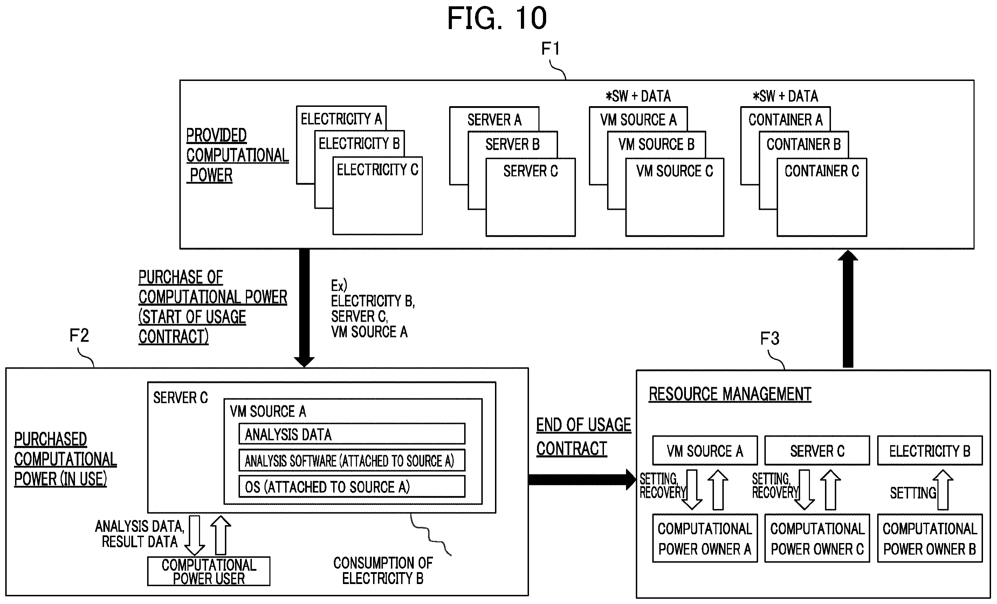

Next, transition of the components of the computational power in the transaction of the computational power token will be described with reference to Fig. 10. Fig. 10 is a diagram for describing the transition of the components of the computational power in the transaction of the computational power token separately for phases.

As shown in Fig. 10, the component of the computational power in the computational power transaction mainly transitions in three phases such as a "provided computational power" phase F1 of providing the computational power by the computational power owner O, a "purchased computational power" phase F2 of utilizing the computational power by the computational power user U, and a "resource management" phase F3 of managing the resource by the computational power owner O.

When the computational power owner O provides the computational power to the server 1, the computational power is taken as a provided computational power, and the transition to the "provided computational power" phase F1 is made. In the "provided computational power" phase F1, in a case where operation is performed using the computational power token, the computational power token is created, and various computational powers provided by various computational power owners O are managed as transaction targets. For example, a computational power owner B provides electricity B as the electricity, a computational power owner C provides a server C as the server, and a computational power owner A provides a VM source A as the VM source A. The unit of the computational power provided and the definition of the computational power token are as described above, and computational power components other than those shown in Fig. 10 are also managed as transaction targets. In this example, the VM source and a container are items or information obtained by integrating software and data.

When the sales of the provided computational power are concluded via an arbitrary computational power user U, a contract on use of the computational power starts at proper timing. For example, the electricity B, the server C, and the VM source A can be purchased, and the transition to the "purchased computational power" phase F2 is made. In the "purchased computational power" phase F2, the purchased computational power has a function of starting the VM source A in the server C and activating OS and analysis software attached to the VM source. Meanwhile, the computational power user U implements one's own analysis data and executes analysis, thereby obtaining result data. In this process, the electricity B is consumed.

After the end of the usage contract, transition to the "resource management" phase F3 is made. In the "resource management" phase F3, the computational power owner A as the provider performs operation such as setting (modification, expansion) or recovery on the VM source A. The computational power owner C as the provider performs operation such as setting (modification, expansion) or recovery on the server C. The computational power owner B as the provider performs setting operation on the electricity B. At this point of time, in a case where the computational power owner O recovers the computational power or does not confirm the setting, such a computational power is not taken as the provided computational power and is not targeted for the transaction thereafter. By confirming the setting and providing the computational power, such a computational power is targeted as the provided computational power for the transaction. By the above-described three-phase cycle, the computational power is provided, utilized, and managed as the resource.

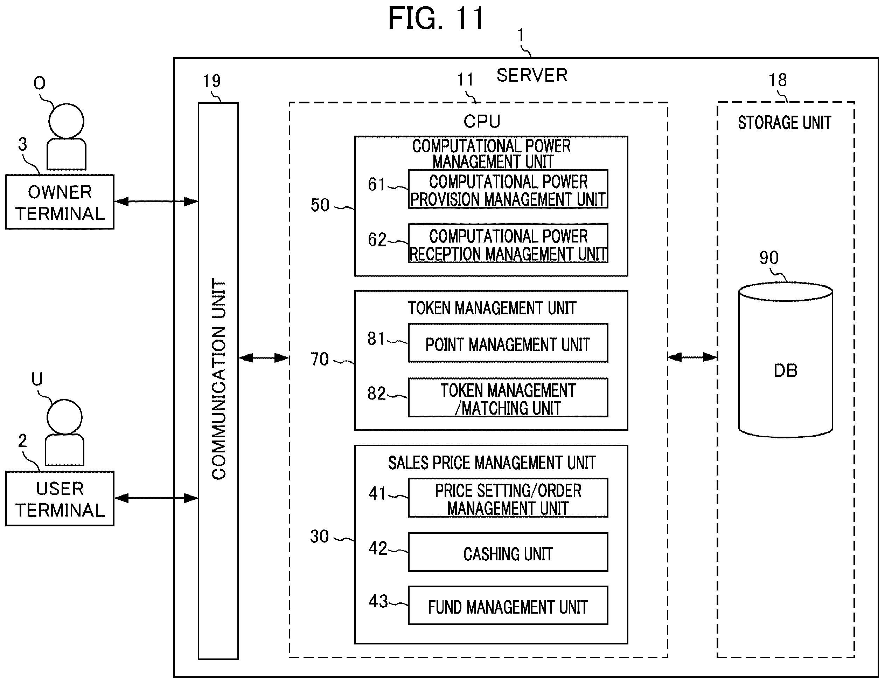

A server according to a second embodiment of the information processing device of the present invention will be described. First, a functional configuration of the server of the second embodiment will be described with reference to Fig. 11. Fig. 11 is a functional block diagram showing the second embodiment of the functional configuration of the server having the hardware configuration of Fig. 3. Note that in description of the second embodiment, the same reference numerals are used to represent the same components as those of the first embodiment and description thereof will be omitted. As shown in Fig. 11, in the CPU 11 of the server 1, the sales price management unit 30, the computational power management unit 50, and a token management unit 70 function when the processing related to the sales transaction of the computational power is executed. That is, Fig. 11 shows the server 1 of the second embodiment having an additional functional configuration, and the token management unit 70 is further added to the sales price management unit 30 and the computational power management unit 50 shown in Fig. 4.

The sales price management unit 30 includes the price setting/order management unit 41, a cashing unit 42, and the fund management unit 43.

The cashing unit 42 cashes the price equivalent to the computational power token purchased by the computational power user U into cash or the like paid from the fund management unit 43.

The token management unit 70 includes a point management unit 81 and a token management/matching unit 82.

The point management unit 81 issues the amount of points separately set according to the amount of money entered by the computational power user U. The issued points are sent to the computational power user U. In this manner, the point as the value utilized for the transaction and the point management unit 81 that manages the point are introduced so that the net value of the computational power can be evaluated without currency influence as compared to a case of using cash. For example, independently of price movement of JPY/USD, the value of the computational resource of one server or the like can be quantified as the computational power. Moreover, the influence of the computational power owner O or the computational power user U on a transaction currency can be reduced, and the transaction can be smoothly made even when the computational power owner O and the computational power user U use different currencies.

The token management/matching unit 82 manages the issued computational power token according to the computational power provided from the computational power owner O. Specifically, the token management/matching unit 82 searches whether or not a desired computational power token is present at an arbitrary point of time, and as a result of search, in a case where there are a plurality of computational power tokens satisfying the limitation (purchase condition) provided by the computational power user U, executes matching processing on the limitation provided by the computational power user U and the computational power token (contents of the computational power). Matching is performed at least one of a method of uniquely determining one token of the plurality of tokens with a particular computational power component as the index, a method of computing one token with the contents most advantageous to the computational power user U, such as a low sales price, a method of disclosing all the tokens to the computational power user U and causing the computational power user U to select one token, or a method of performing recommendation evaluation on all the tokens and prompting the computational power user U to select one token. As a matching algorithm, the token management/matching unit 82 may separately receive a plurality of algorithms, and the computational power user U may select the matching algorithm. The plural different matching algorithms are provided, and therefore, a computational power market is optimized by action of a competition principle. In the above-described case, various algorithms can handle the components of the computational power described in the computational power token as data, and as necessary, the limitation provided by the computational power user U can be described. The example of the case where there is the plurality of tokens with the same contents has been described above, but as long as one token can be selected by an arbitrary method, for example, matching may be performed on one token of the plurality of tokens in the order of provision from the computational power owner O. In a case where matching is made, the computational power token is sold and purchased. After the sales of the computational power token has been concluded, the token management/matching unit 82 makes the payment for the computational power token using the points obtained and entered into the point management unit 81 from the computational power user U, and therefore, can acquire (obtain) the computational power token. The token management/matching unit 82 notifies the computational power reception management unit 62 of information (for example, the payment made) on the computational power token acquired (obtained) by the computational power user U. In this manner, the computational power user U can receive the computational power from the computational power reception management unit 62 or the computational power owner O.

According to the configuration of the server 1 of the second embodiment, the token management unit 70 is added in addition to the functional configuration of the server 1 of the first embodiment shown in Fig. 4, so that the convenience, the robustness, and health regarding the transaction of the computational power can be improved.

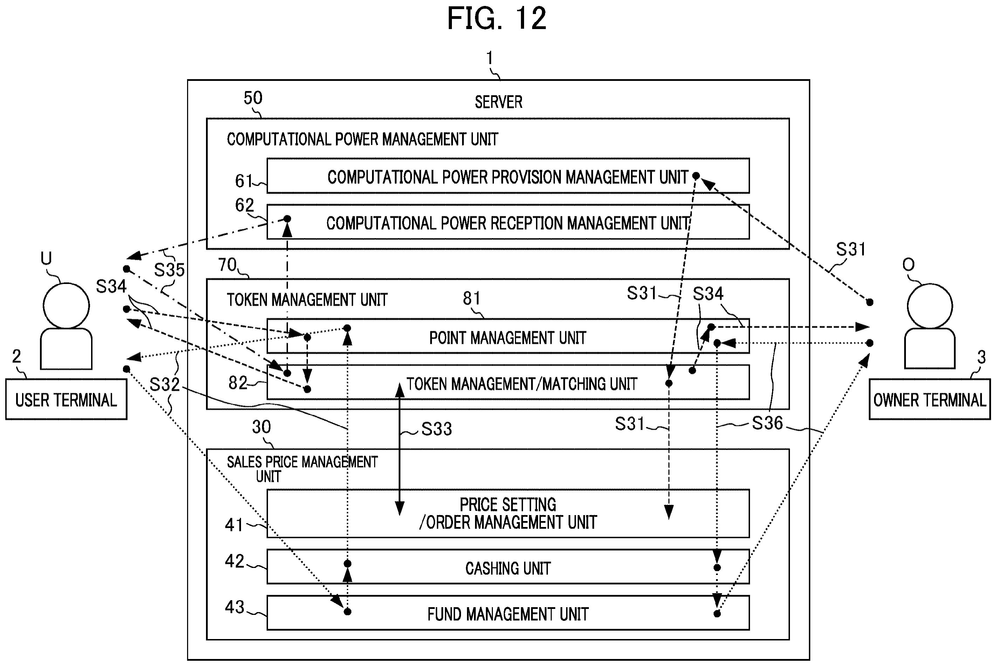

Subsequently, operation of the server 1 of the second embodiment will be described with reference to Fig. 12. Operation of the server 1 will be described in detail while one example of an operation flow when the server 1 of Fig. 11 is operated is shown for each unit described above in Fig. 12. Fig. 12 is a diagram for describing the flow of the processing of the transaction of the computational power in the server having the functional configuration (second embodiment) of Fig. 11.

The processing of the transaction of the computational power in the server of the second embodiment includes Steps S31 to S36 below. In Step S31 (computational power providing step) of Fig. 12, when the computational power owner O provides the information on the computational power, the computational power provision management unit 61 manages the provided information on the computational power. Here, providing the information on the computational power is bringing the components of the computational power into a state of the computational power user U being able to use these components, and may be bringing the components of the computational power into a state of the computational power user U being able to use these components at predetermined date and time in the future or in a predetermined period in the future according to a contract or the like. The computational power provision management unit 61 receives the above-described contents (information regarding the computational power) of the computational power provided by the computational power owner O. The received contents are stored in the DB 90, and are shared with the token management/matching unit 82. Here, sharing indicates that the computational power provision management unit 61 notifies the token management/matching unit 82 of provision of the information on the computational power from the computational power owner O and the contents thereof are brought into a readable state from the DB 90 as needed. At this time, the sales condition such as the asking sales price for the computational power provided by the computational power owner O may be received. The token management/matching unit 82 issues the token indicating the contents of the provided and shared computational power. The token is preferably electronic. The information on issuance of the token is shared with the price setting/order management unit 41. The token may include the asking sales price provided by the computational power owner O.

In Step S32 (fund entering step), the computational power user U enters the fund into the fund management unit 43. The fund management unit 43 receives the contract for sending or receiving cash or money and the amount thereof. The received amount of money is shared with the point management unit 81. The point management unit 81 issues the amount of points separately set according to the amount of money. The issued points are sent to the computational power user U.

In Step S33 (computational power token market sales step), the token management/matching unit 82 shares the token issuance information with the price setting/order management unit 41, and thereafter, the price setting/order management unit 41 determines the sales price in units of point (hereinafter referred to as a point sales price) by a predetermined method. For example, as the point sales price, an absolute fixed price may be set in advance by quantitative and qualitative evaluation on the computational power described in the token, or a relative price may be determined by comparison of a plurality of computational powers. Alternatively, according to a stock market sales method, the price may be determined based on a market principle by a limit order or a market order. At this time, the computational power user U may provide a limitation such as a minimum requirement or a desired condition on the component of the computational power, and may apply for various orders. For example, the price setting/order management unit 41 discloses the contents of the token to the computational power user U, and receives the numerical value of the point sales price as quantitative and qualitative evaluation on the token by the computational power user U while receiving the desired sales price from the computational power owner O, and performs various orders from comparison of both these sales prices. For example, in a case where for a token with certain contents, the computational power user U orders the token at 100 points by a limit order and the computational power owner O sets a sales price of 90 points or more for the token, the sales are concluded at 100 points. Alternatively, for example, in a case where for two tokens with equivalent contents, the computational power user U makes a market order, the computational power owner O of one of these tokens sets a desired sale price of 90 points or more, and the computational power owner O of the other token sets a desired sales price of 80 points or more, the sales are concluded at 80 points. The computational power user U can provide a limitation (condition) such as a minimum requirement or a desired condition on a desired token. The token management/matching unit 82 searches whether or not the desired token is present at an arbitrary point of time. As a result of search, in a case where there is a plurality of tokens satisfying the limitation provided by the computational power user U, matching is made between the limitation provided by the computational power user U and the token. Matching is performed by a method of uniquely determining one token of the plurality of tokens with a particular computational power component as the index, a method of computing one token with the contents most advantageous to the computational power user U, such as a low sales price, a method of disclosing all the tokens to the computational power user U and causing the computational power user U to select one token, a method of performing recommendation evaluation on all the tokens and prompting the computational power user U to select one token, or the like. As a matching algorithm, the token management/matching unit 82 may separately receive a plurality of algorithms, and the computational power user U may select the matching algorithm. The plural different matching algorithms are provided, and therefore, the computational power market is optimized by action of the competition principle. In the above-described case, various algorithms can handle the components of the computational power described in the token as data, and as necessary, the limitation provided by the computational power user U can be described. In a case where there is a plurality of tokens with the same contents, one token only needs to be selected by an arbitrary method, and for example, matching can be made on one token of the plurality of tokens in the order of provision from the computational power owner O. In a case where matching is made, the computational power token is sold and purchased.

In Step S34 (computational power token purchasing step), after the sales of the computational power token have been concluded, the computational power user U enters the obtained points into the point management unit 81, and purchases and acquires (obtains) the token via the token management/matching unit 82. Moreover, the computational power owner O obtains the points from the point management unit 81 based on the contents of matching made in the token management/matching unit 82.

In Step S35 (computational power reception step), the computational power user U enters the computational power token into the token management/matching unit 82, and in this manner, can receive the computational power from the computational power reception management unit 62. Thus, the computational power user U can perform the computation. As necessary, the computational power may be directly provided from the computational power owner O, and in this case, an indication of direct provision of the computational power from the computational power owner O is described in the token.

In Step S36 (point cashing step), when the computational power owner O enters the points into the server 1, the point management unit 81 of the server 1 stores the entered points in the DB 90 in association with the account of the computational power owner O, and shares the points with the cashing unit 42. The cashing unit 42 cashes the shared points into cash or the like via the fund management unit 43, and pays the price for the computational power purchased by the computational power user U to the computational power owner O.

As described above, according to the server 1 of the second embodiment, the server 1 can implement a series of service including provision of the computational power from the computational power owner O, reception of the computational power by the computational power user U, reception of the price from the computational power user U, and payment of the price to the computational power owner O. The point and the point management unit 81 are introduced so that the net value of the computational power can be evaluated without the currency influence as compared to the case of using cash. For example, independently of the price movement of JPY/USD, the value of the computational resource of one server can be quantified. By introducing the computational power token, the plurality of indices (electricity, hardware, software, data, and the like) characterizing the computational power can be described in one unit. For example, in a case where server specifications, a server location, and the like are included in the indices of the computational power token and two arbitrary servers (computational power tokens) has different specifications, different locations, and an equivalent computational power as a whole, the computational power token can show the indices enough for determination to the computational power user U who focuses on the specifications and the computational power user U who focuses on the location.

With the token management/matching unit 82, the computational power user U can easily obtain a desired token, i.e., can easily token the computational power. The computational power of the computational power owner O who has been unknown so far can be used. At the sales price based on the computational power supply and demand balance, the computational power can be provided from the computational power owner O to the computational power user U.

By introducing the computational power token, the transaction can be performed for each component of the computational power. For both the computational power owner O and the computational power user U, the convenience of the computational resource can be improved with more flexibility. As described above, the health of the computational power transaction is improved by the price determination method according to the market principle.

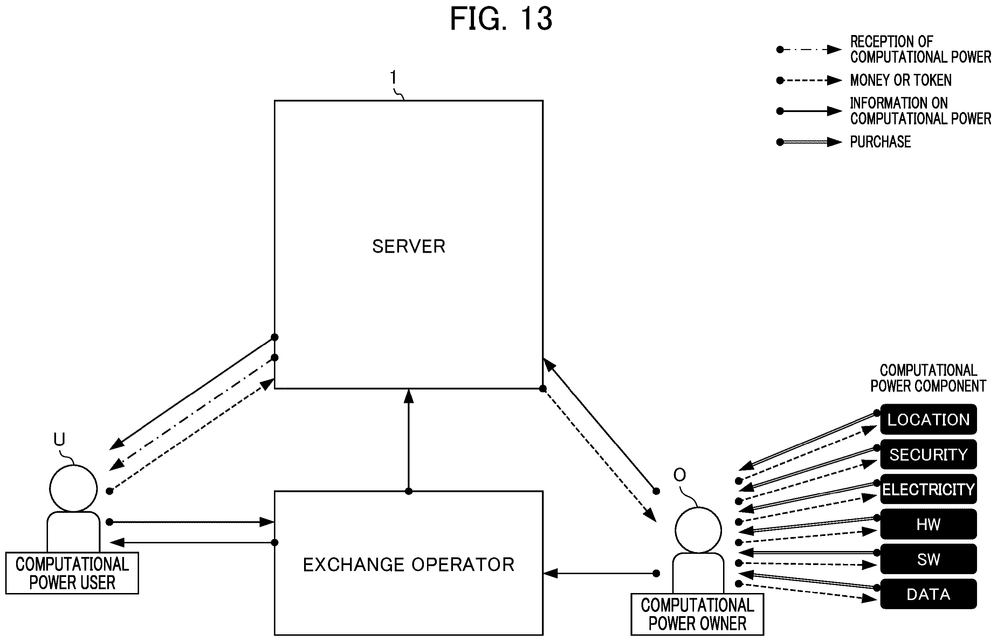

Hereinafter, a specific flow of computational power transaction will be described with reference to some examples. First, an example of a simple flow of computational power transaction will be described with reference to Fig. 13. Fig. 13 is a diagram showing an example of a simple flow of computational power transaction of the information processing system shown in Fig. 2. The server 1 shown in Fig. 13 receives input resource information which can be provided among computational powers owned by m computational power owners O (m is an integer of one or more) themselves. Upon input, a plurality of elements such as an installation location, a security level, the presence or absence of use of green electricity, a hardware configuration, software, and data are included, and the number of points is defined according to specifications. From the resource information disclosed on the server 1, n computational power users U (n is an integer of one or more) who utilize the computational powers can select, reserve, and utilize resources matching the requirements. Note that not only from the computational power user U and the computational power owner O themselves, but also from an exchange operator managing operation of the present device, the resources can be registered and reserved based on the obtained information.

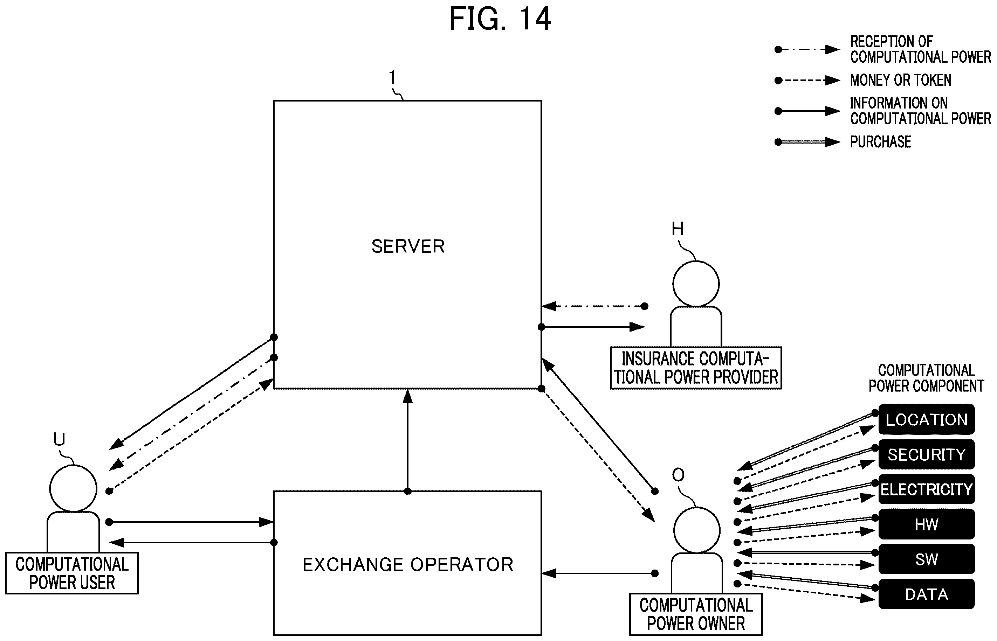

Next, an example of the computational power transaction in an insurance service will be described with reference to Fig. 14. Fig. 14 is a diagram showing an example of the computational power transaction in an insurance service in the information processing system shown in Fig. 2. In the example of Fig. 14, an insurance computational power provider H is added. In a case where the demand from the computational power user U exceeds the resource amount provided by the computational power owner O or there are no resources matching the condition, the insurance computational power provider H obtains information from the server 1 that the computational power lacks, and covers the computational power. Covering method and contents are only required to be agreed with the computational power user U, and for example, may be separately providing a computational power (for example, server) with specifications equivalent to specifications (for example, server) demanded by the computational power user U, separately providing another computational power (for example, electricity) with a value equivalent to that of a computational power (for example, server) demanded by the computational power user U, or returning points (token) or money equivalent to specifications demanded by the computational power user U.

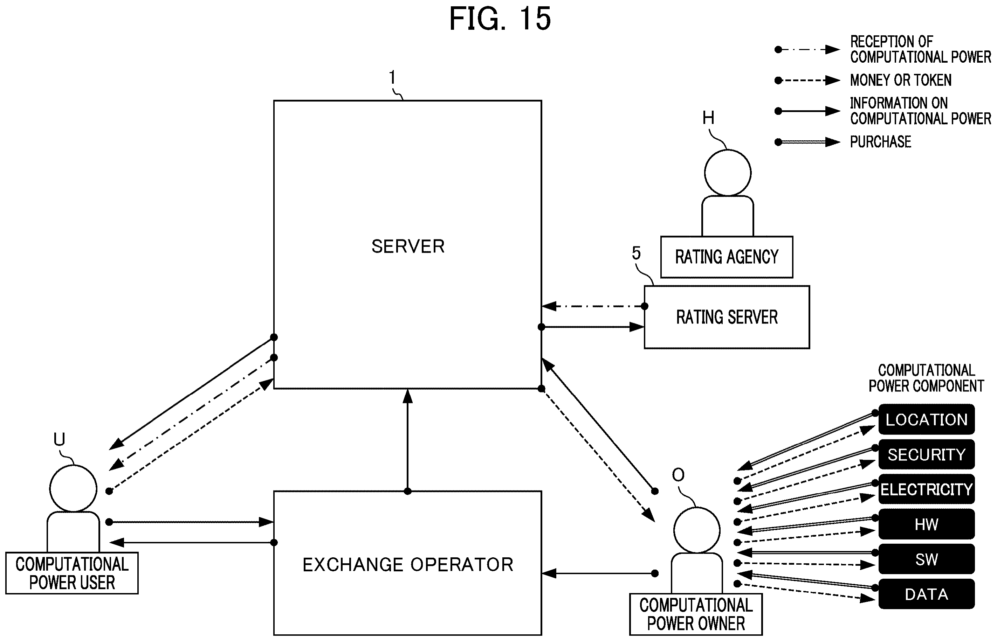

Next, an example where a rating function of evaluating a computational resource provided by a computational power owner is added will be described with reference to Fig. 15. Fig. 15 is a diagram showing an example where a rating function of evaluating a computational resource provided by a computational power owner is added. In Fig. 15, a rating function of evaluating a computational resource provided by the computational power owner O is provided. The rating function is implemented, for example, by implementation of a thinking program installed in a rating server 5, such an artificial intelligence (AI). With the rating function, a market price is determined in an objective manner based on the resource information provided from the computational power owner O, and the offered price for the computational power user U is determined. Moreover, the rating contents can be reflected on the computational power token, and can function as reference information when the computational power user U selects the computational power token. Thus, the computational power user U can utilize the computational resource with the number of points according to a market rate.

Next, an example where an investor element is further added to the example of Fig. 15 will be described with reference to Fig. 16. Fig. 16 is a diagram showing an example where an investor element is further added to the example of Fig. 15. In the example of Fig. 16, an investor T element is further added to the elements of Fig. 15. In this case, the number of points evaluated by the rating function is assigned to each computational power token, and since the number of points fluctuates according to demand or a market tendency, the computational power token can be purchased in advance at a timing when the number of points required is small, and can be listed for sale at a timing when the demand, i.e., the number of points, is high. Determination on purchase of the computational power token according to point fluctuation is applied not only to the investor T, but also to the computational power user U.

One embodiment of the present invention has been described above, but the present invention is not limited to the above-described embodiment and changes, modifications, and the like made within a scope in which the object of the present invention can be accomplished are included in the present invention.

For example, the above-described series of processing may be executed by hardware or software. In other words, the functional configuration of Fig. 4 or 11 is merely an example, and is not particularly limited. That is, it is enough that the function which can execute the above-described series of processing as a whole is included in the information processing system or the information processing device, and the functional block to be used for implementing this function is not particularly limited to that of the example of Fig. 4 or 11. The locations of the functional block and the database are not particularly limited to those of Fig. 4 or 11, and may be arbitrary locations. For example, at least part of the functional blocks and database necessary for executing various types of processing may be transferred to the user terminal or the like. Conversely, the functional blocks and database of the user terminal may be transferred to the server or the like. One functional block may be implemented by hardware alone, software alone, or a combination thereof.

In a case where the series of processing is executed by the software, programs forming the software are installed in, a computer or the like from a network or a storage medium. The computer may be a computer incorporated into dedicated hardware. Alternatively, the computer may be a computer capable of executing various functions by installation of various programs, such as a general-purpose smartphone or personal computer other than a server.

The recording medium including these programs is not only a not-shown removable medium distributed separately from a device body to provide a user with the programs, but also a recording medium or the like provided to a user or the like with incorporated in advance into a device body, for example.

Note that in the present specification, the steps of describing the programs recorded in the recording medium include not only processing performed in chronological order, but also processing executed in parallel or individually. Moreover, in the present specification, the term "system" means an entire device including a plurality of devices, means, and the like.

In other words, the information processing device to which the present invention is applied is only required to have the following configurations, and may include various embodiments. That is, an information processing device (for example, server 1 of Fig. 4) to which the present invention is applied includes
(1) computational power value evaluation means (for example, price setting/order management unit 41 of the sales price management unit 30 of Fig. 4) that evaluates a predetermined value (for example, XX points or the like) of a right (for example, computational power token) to utilize a predetermined unit of computational power defined by a plurality of indices (for example, electricity, hardware, software, data) provided from a computational power owner (for example, computational power owner O of Fig. 4). With this configuration, convenience in provision, utilization, and management of a computational resource can be improved.
(2) The information processing device can further include token issuance transfer means (price setting/order management unit 41 of the sales price management unit 30 of Fig. 4) that executes control of issuing, to the computational power owner (for example, computational power owner O of Fig. 4), a token (for example, computational power tokens 91, 92 of Figs. 8 and 9) for enforcing the right, and transferring the token (for example, computational power tokens 91, 92 of Figs. 8 and 9) from the computational power owner (for example, computational power owner O of Fig. 4) to a computational power user (for example, computational power user U of Fig. 4) at the predetermined value (for example, point), and computational power management means (for example, computational power management unit 50 of Fig. 4) that executes control of receiving the predetermined unit of computational power described in the token (for example, computational power tokens 91, 92 of Figs. 8 and 9) from the computational power owner (for example, computational power owner O of Fig. 4) to which the token (for example, computational power tokens 91, 92 of Figs. 8 and 9) has been issued and causing the computational power user (for example, computational power user U of Fig. 4) to which the token (for example, computational power tokens 91, 92 of Figs. 8 and 9) has been transferred to receive the predetermined unit of computational power described in the token (for example, computational power tokens 91, 92 of Figs. 8 and 9).
(3) In a case where a plurality of tokens (for example, computational power tokens 91, 92 of Figs. 8 and 9) having at least some of the indices identical to each other is utilized, the computational power management unit (for example, computational power management unit 50 of Fig. 4) executes control of causing the computational power user (for example, computational power user U of Fig. 4) to receive the predetermined unit of computational power with priority given to a token with a high predetermined priority defined in advance (for example, in the order of resource registration by the computational power owner O) among the plurality of tokens (for example, computational power tokens 91, 92 of Figs. 8 and 9).
(4) The information processing device further includes matching means (for example, token management/matching unit 82 of Fig. 11) that executes control of listing a predetermined token (for example, computational power tokens 91, 92 of Figs. 8 and 9) and awarding the predetermined token (for example, computational power tokens 91, 92 of Figs. 8 and 9) to a computational power user satisfying a predetermined bidding condition among a plurality of computational power users (for example, computational power user U of Fig. 4), and the computational power value evaluation means (for example, price setting/order management unit 41 of sales price management unit 30 of Fig. 4) evaluates a value of the awarded token (for example, computational power tokens 91, 92 of Figs. 8 and 9) based on the predetermined bidding condition. With this configuration, the evaluated value is reflected on evaluation of the computational power newly provided from the computational power owner in the future.
(5) The computational power value evaluation means (for example, price setting/order management unit 41 of the sales price management unit 30 of Fig. 4) selects a token (for example, computational power tokens 91, 92 of Figs. 8 and 9) that satisfies a condition specified by the computational power user (for example, computational power user U of Fig. 4), and recommends the token (for example, computational power tokens 91, 92 of Figs. 8 and 9) to the computational power user (for example, computational power user U of Fig. 4). With this configuration, the computational power user can easily find a token (for example, computational power token) including desired contents without the need for checking, by oneself, the contents of tokens (for example, computational power tokens) slightly different from each other in computational power contents one by one among many tokens (for example, computational power tokens) listed.
(6) The computational power management means (for example, computational power management unit 50 of Fig. 4) provides a computational power to a computational power user (for example, computational power user U of Fig. 4) that satisfies a condition specified by the computational power owner (for example, computational power owner O).
(7) In the token issuance transfer means (price setting/order management unit 41 of the sales price management unit 30 of Fig. 4) and the computational power management means (for example, computational power management unit 50 of Fig. 4), a token typified by a point or the like is taken as the unit of transaction.
(8) An information processing method to which the present invention is applied is
   an information processing method executed by an information processing device, which includes
   a step of evaluating a predetermined value (for example, XX points) of a right (for example, computational power tokens 91, 92 of Figs. 8 and 9) to utilize a predetermined unit of computational power defined by a plurality of indices (for example, electricity, hardware, software, data) provided from a computational power owner (for example, computational power owner O of Fig. 4).
(9) A program to which the present invention is applied causes
   a computer to execute control processing including
   a step of evaluating a predetermined value (for example, XX points) of a right (for example, computational power tokens 91, 92 of Figs. 8 and 9) to utilize a predetermined unit of computational power defined by a plurality of indices (for example, electricity, hardware, software, data) provided from a computational power owner (for example, computational power owner O of Fig. 4).

### EXPLANATION OF REFERENCE NUMERALS

- 1:: Server
- 2:: User Terminal
- 11:: CPU
- 12:: ROM
- 13:: RAM
- 14:: Bus
- 15:: Input/Output Interface
- 16:: Input Unit
- 17:: Output Unit
- 18:: Storage Unit
- 19:: Communication Unit
- 20:: Drive
- 21:: Removable Medium
- 30:: Sales Price Management Unit
- 41:: Price Setting/Order Management Unit
- 42:: Cashing Unit
- 43:: Fund Management Unit
- 50:: Computational power Management Unit
- 61:: Computational power Provision Management Unit
- 62:: Computational power Reception Management Unit
- 70:: Token Management Unit
- 81:: Point Management Unit
- 82:: Token Management/Matching Unit
- S:: Service Provider
- NW:: Network
- 90:: Database (DB)
- 91, 92:: Computational power Token

## Claims

1. An information processing device comprising:
computational power value evaluation unit that evaluates a predetermined value of a right to utilize a predetermined unit of computational power defined by a plurality of indices provided from a computational power owner.

2. The information processing device according to claim 1, further comprising:
token issuance transfer unit that executes control of issuing, to the computational power owner, a token for enforcing the right, and transferring the token from the computational power owner to a computational power user at the predetermined value; and
computational power management unit that executes control of receiving the predetermined unit of computational power described in the token from the computational power owner to which the token has been issued and causing the computational power user to which the token has been transferred to receive the predetermined unit of computational power described in the token.

3. The information processing device according to claim 2, wherein
in a case where a plurality of tokens having at least some of the indices identical to each other is utilized, the computational power management unit executes control of causing the computational power user to receive the predetermined unit of computational power with priority given to a token with a high predetermined priority defined in advance among the plurality of tokens.

4. The information processing device according to claim 2, further comprising:
matching unit that executes control of listing a predetermined token and awarding the predetermined token to a computational power user satisfying a predetermined bidding condition among a plurality of computational power users,
wherein the computational power value evaluation unit evaluates a value of the awarded token based on the predetermined bidding condition.

5. The information processing device according to claim 2, wherein
the computational power value evaluation unit selects a token that satisfies a condition specified by the computational power user, and recommends the token to the computational power user.

6. The information processing device according to claim 2, wherein
the computational power management unit provides a computational power to a computational power user that satisfies a condition specified by the computational power owner.

7. The information processing device according to claim 2, wherein
in the token issuance transfer unit and the computational power management unit, a token typified by a point or the like is taken as a unit of transaction.

8. An information processing method executed by an information processing device, comprising:
a step of evaluating a predetermined value of a right to utilize a predetermined unit of computational power defined by a plurality of indices provided from a computational power owner.

9. A program causing
a computer to execute control processing including
a step of evaluating a predetermined value of a right to utilize a predetermined unit of computational power defined by a plurality of indices provided from a computational power owner.
